# DEMANDE DE BREVET EUROPEEN

(11) **EP 2 487 676 A1**
(43) Date de publication de la demande: **15.08.2012**
(21) Numéro de dépôt: 12305140.1
(22) Date de dépôt: 09.02.2012
(51) Int. Cl.: G10K 11/16, B64F 5/00

(54) **Panneau pour le traitement acoustique comprenant une jonction entre deux parties et procede de reparation d'un panneau pour le traitement acoustique**

(30) Priorité: 10.02.2011 FR 1151080
(71) Demandeur: Airbus Opérations SAS, 31060 Toulouse (FR)
(72) Inventeur: Bornert-Dano, Véronique, 31700 Blagnac (FR)
(74) Mandataire: Fantin, Laurent

(57) **Abrégé**

L'objet de l'invention est un panneau pour le traitement acoustique comportant d'une part au moins deux portions avec des chants espacés selon au moins une direction et avec de l'extérieur vers l'intérieur une couche acoustique résistive (54), au moins une structure alvéolaire (56) et une couche réflectrice (58), et d'autre part, un bloc intercalé entre les deux chants comportant de l'extérieur vers l'intérieur, une couche acoustiquement résistive (68) disposée au niveau de ladite couche acoustiquement résistive (54) des deux portions (56) et au moins une structure alvéolaire (70), **caractérisé en ce que** le bloc comprend au moins un secteur de structures alvéolaires avec des conduits inclinés dont la hauteur h est inférieure à la hauteur H de la structure alvéolaire (56) du panneau pour le traitement acoustique, lesdits conduits étant inclinés selon une direction telle que les extrémités des conduits soient proches d'un des chants des portions au niveau de la couche acoustiquement résistive (54) et les extrémités opposées desdits conduits soient écartées dudit chant et de la couche réflectrice (58) des deux portions de manière à loger des moyens de liaison entre ledit bloc et ledit panneau.

## Description

La présente invention se rapporte à un panneau pour le traitement acoustique comprenant une jonction, ledit panneau étant plus particulièrement destiné à être disposé au niveau d'une paroi d'une nacelle d'aéronef. L'invention se rapporte également à un procédé de réparation d'un panneau pour le traitement acoustique.

Le bruit émis par un ensemble propulsif d'un aéronef se compose d'une part du bruit de jet, produit à l'extérieur des conduits suite au mélange des différents écoulements d'air et gaz brûlés, et d'autre part, du bruit généré par les parties internes, dit bruit interne, produit par la soufflante, les compresseurs, les turbines et la combustion qui se propage à l'intérieur des conduits.

Pour limiter l'impact des nuisances sonores à proximité des aéroports, les normes internationales sont de plus en plus contraignantes en matière d'émissions sonores.

Des techniques ont été développées pour réduire le bruit interne, notamment en disposant, au niveau des parois des conduits, des panneaux ou revêtements visant à absorber une partie de l'énergie sonore, notamment en utilisant le principe des résonateurs quart d'onde.

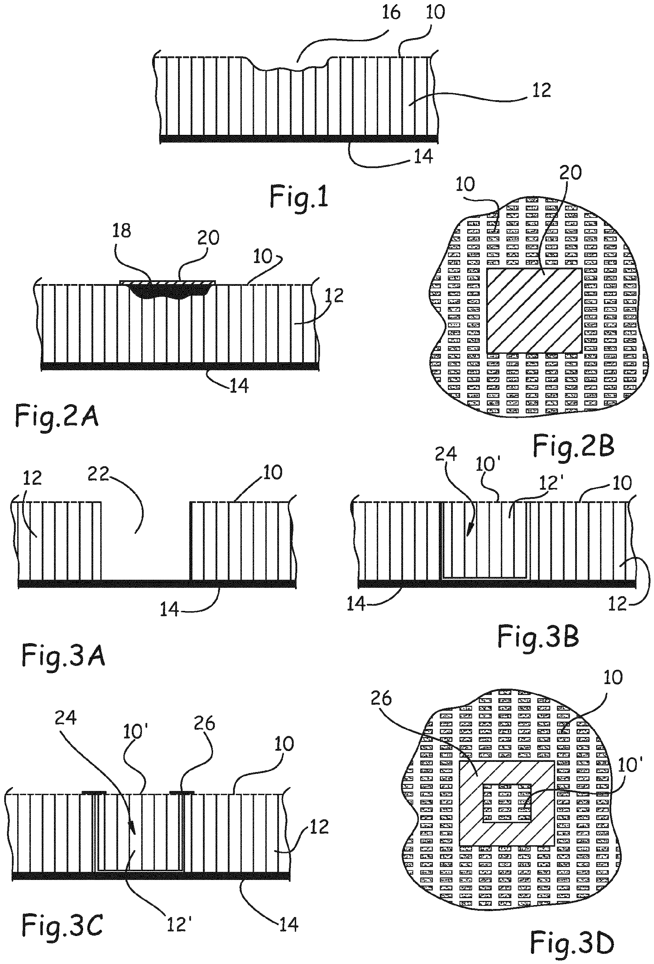

De manière connue, comme illustré sur la figure 1, un panneau pour le traitement acoustique, également appelé panneau ou revêtement acoustique, comprend de l'extérieur vers l'intérieur une structure acoustiquement résistive 10, une structure alvéolaire 12 et une couche réflectrice 14.

Par couche, on entend une ou plusieurs couches de même nature ou non.

Selon un mode de réalisation, la couche réflectrice 14 peut être une tôle ou une plaque non perforée, métallique ou en matériau composite.

La structure alvéolaire 12 peut comprendre une pluralité de cavités juxtaposées, obturées à une extrémité par la couche réflectrice 14 et partiellement obturées à l'autre extrémité par la couche acoustiquement résistive 10. Les cavités de la structure alvéolaire sont délimitées par des parois perpendiculaires à la couche réflectrice 14 ou à la couche acoustiquement résistive 10 dont les extrémités sont collées contre ladite couche réflectrice 14 et la couche acoustiquement résistive 10.

Selon un mode de réalisation, la structure alvéolaire 12 se présente sous la forme d'un nid d'abeilles métallique ou en matériau composite.

La structure acoustiquement résistive 10 est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

Pour recouvrir une surface comme une entrée d'air d'une nacelle d'aéronef, plusieurs panneaux pour le traitement acoustique peuvent être juxtaposés et reliés par des éclisses. Ces éclisses n'ont pas de fonction acoustique et doivent avoir une largeur suffisante pour obtenir une structure ayant des caractéristiques mécaniques suffisantes. Ce mode d'assemblage ne permet pas d'obtenir un traitement acoustique optimisé dans la mesure où le taux de surface ouverte n'est pas homogène sur toute la surface en raison de la présence des éclisses.

Pour optimiser le traitement acoustique, la demanderesse a développé une technique particulière dite « 0-splice » décrite dans les documents FR-2.844.304 ou US-6.772.857. Selon cette technique, la couche acoustiquement résistive est constituée d'une pluralité de bandes disposées selon le sens d'écoulement des flux et reliées entre elles par une pluralité d'éclisses assurant la reprise des efforts et ayant une largeur réduite par rapport à la largeur des bandes de manière à assurer la continuité du caractère homogène du taux de surface ouverte.

Sur la figure 1, on a représenté un panneau pour le traitement acoustique dont la surface en contact avec le flux d'air est endommagée et comprend une déformation 16 en creux, en raison par exemple d'un impact accidentel en vol (oiseau, glace,..) ou en maintenance (chute d'outils,...).

Cette déformation en creux 16 tend à produire des perturbations aérodynamiques au niveau de l'écoulement du flux d'air en contact avec ledit panneau, à altérer le traitement acoustique et peut réduire la tenue structurale du panneau. Aussi, il est nécessaire de réparer le panneau pour au moins limiter les perturbations aérodynamiques.

Selon un premier mode opératoire décrit sur les figures 2A et 2B, on injecte dans les cellules ou conduits de la structure alvéolaire abimés une résine 18 de manière à colmater la déformation en creux puis on dispose éventuellement sur la zone abimée une plaque avant 20 qui recouvre la résine 18 et qui s'étend au-delà de la zone abimée de manière à être liée par collage, rivetage ou autre avec la couche acoustiquement résistive 10.

Cette plaque avant peut être métallique ou composite.

Comme illustré sur la figure 3B, la plaque avant 20 est une surface pleine et a par conséquent un taux de surface ouverte nul si bien qu'au niveau de la zone recouverte le traitement acoustique est complètement supprimé.

Un autre mode opératoire décrit sur les figures 3A à 3D vise à limiter l'impact de la réparation sur le traitement acoustique. Selon ce mode opératoire, on retire la structure alvéolaire 12 et la couche acoustiquement résistive 10 au niveau de la déformation en creux 16 de manière à obtenir un évidement 22 délimité par des bords perpendiculaires à la couche réflectrice 14, comme illustré sur la figure 3A.

On découpe un bloc 24 avec des formes adaptées à l'évidement 22, ce bloc comportant une structure alvéolaire 12' recouverte par une couche acoustiquement résistive 10' identiques à la structure alvéolaire 12 et à la couche acoustiquement résistive 10 du panneau pour le traitement acoustique à réparer. Ce bloc 24 est introduit dans l'évidement 22, comme illustré sur la figure 3B. Pour assurer la liaison entre le bloc 24 et le reste du panneau pour le traitement acoustique, on utilise une éclisse 26 au niveau de la frontière séparant le bloc 24 et le reste du panneau, disposée à cheval sur ladite frontière et reliée au bloc 24 et au reste du panneau par collage, rivetage ou autre, comme illustré sur la figure 3C. Cette éclisse 26 peut se présenter sous la forme de plis noyés dans une résine.

Comme la plaque avant 20 du premier mode opératoire, l'éclisse 26 a un taux de surface ouverte nul si bien qu'au niveau de la zone recouverte par ladite éclisse 26, le traitement acoustique est complètement supprimé. Contrairement au premier mode opératoire, celui-ci limite l'impact de la réparation sur le traitement acoustique dans la mesure où la surface du bloc 24 non recouverte par l'éclisse 26 assure un traitement acoustique.

Ainsi, les modes opératoires de réparation connus conduisent tous à des pertes de surfaces traitées sur le plan acoustique et engendrent des discontinuités au niveau du traitement acoustique.

La présente invention propose un panneau pour le traitement acoustique avec une zone de jonction limitant les discontinuités au niveau du traitement acoustique. A cet effet, l'invention a pour objet un panneau pour le traitement acoustique comportant d'une part au moins deux portions avec des chants espacés selon au moins une direction et avec de l'extérieur vers l'intérieur une couche acoustique résistive, au moins une structure alvéolaire et une couche réflectrice, et d'autre part, un bloc intercalé entre les deux chants comportant de l'extérieur vers l'intérieur, une couche acoustiquement résistive disposée au niveau de ladite couche acoustiquement résistive des deux portions et au moins une structure alvéolaire, **caractérisé en ce que** le bloc comprend au moins un secteur de structures alvéolaires avec des conduits inclinés dont la hauteur h est inférieure à la hauteur H de la structure alvéolaire du panneau pour le traitement acoustique, lesdits conduits étant inclinés selon une direction telle que les extrémités des conduits soient proches d'un des chants des portions au niveau de la couche acoustiquement résistive et les extrémités opposées desdits conduits soient écartées dudit chant et de la couche réflectrice des deux portions de manière à loger des moyens de liaison entre ledit bloc et ledit panneau.

Selon un autre objectif, l'invention propose un procédé de réparation d'un panneau pour le traitement acoustique visant à limiter l'impact de ladite réparation sur le traitement acoustique.

D'autres caractéristiques et avantages ressortiront de la description qui va suivre de l'invention, description donnée à titre d'exemple uniquement, en regard des dessins annexés sur lesquels :
- la figure 1 est une coupe illustrant un panneau pour le traitement acoustique endommagé,
- la figure 2A est une coupe illustrant un panneau pour le traitement acoustique réparé selon un premier mode opératoire selon l'art antérieur,
- la figure 2B est une vue de dessus du panneau pour le traitement acoustique de la figure 2A,
- les figures 3A à 3C sont des coupes illustrant les différentes étapes d'un deuxième mode opératoire de réparation d'un panneau pour le traitement acoustique selon l'art antérieur,
- la figure 3D est une vue de dessus du panneau pour le traitement acoustique de la figure 3C,
- la figure 4 est une coupe illustrant un panneau pour le traitement acoustique endommagé,
- les figures 5 à 7 sont des coupes illustrant les différentes étapes du procédé de réparation selon l'invention d'un panneau pour le traitement acoustique selon l'invention,
- la figure 8 est une vue de dessus illustrant un panneau pour le traitement acoustique réparé selon une première variante du procédé de réparation selon l'invention, et
- la figure 9 est une vue de dessus illustrant un panneau pour le traitement acoustique réparé selon une première variante du procédé de réparation selon l'invention.

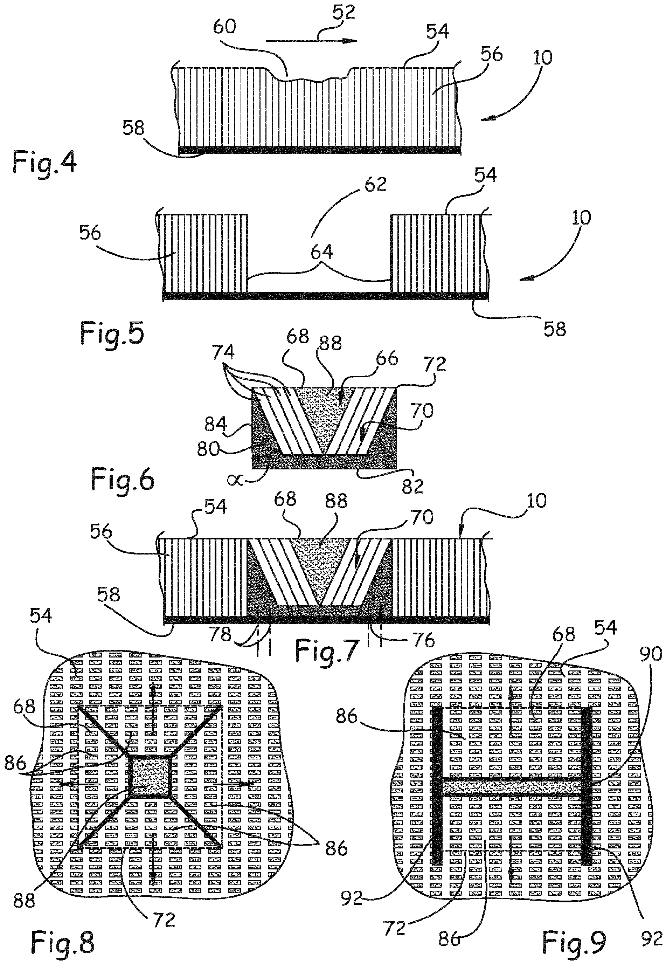

Sur la figure 4, on a représenté en coupe un panneau pour le traitement acoustique 50 dont une surface dite aérodynamique peut être en contact avec un flux d'air référencé par la flèche 52.

Ce panneau pour le traitement acoustique comprend de l'extérieur vers l'intérieur, une couche acoustiquement résistive 54 dont une face est en contact avec le flux d'air 52, au moins une structure alvéolaire 56 et une couche réflectrice 58.

A titre d'exemple, un panneau pour le traitement acoustique peut être disposé dans un conduit d'une nacelle d'aéronef.

Selon les applications, le panneau pour le traitement acoustique peut comprendre plusieurs structures alvéolaires 56 superposées, séparées par une couche acoustiquement résistive.

Par couche, on entend une ou plusieurs couches de même nature ou non.

Selon un mode de réalisation, la couche réflectrice 58 peut être une tôle ou une plaque non perforée, métallique ou en matériau composite.

La structure alvéolaire 56 peut comprendre une pluralité de conduits juxtaposés obturés ou partiellement obturés à chaque extrémité. Chaque conduit est délimité par au moins une paroi sensiblement perpendiculaire à la couche réflectrice 58 et/ou à la couche acoustiquement résistive 54. Ainsi, la structure alvéolaire 56 comprend des conduits droits.

Selon un mode de réalisation, la structure alvéolaire 56 se présente sous la forme d'un nid d'abeilles métallique ou en matériau composite.

Toutefois, l'invention n'est pas limitée à ces modes de réalisation pour la couche réflectrice et la structure alvéolaire.

Selon les variantes, la couche acoustiquement résistive 54 peut comprendre une couche ou plusieurs couches accolées les unes contre les autres.

Selon un mode de réalisation, la couche acoustiquement résistive 54 se présente sous la forme d'une plaque avec des orifices.

Selon une autre variante, la couche acoustiquement résistive 54 comprend au moins une couche poreuse et au moins une structure de renfort. Dans ce cas, la couche poreuse est un tissu métallique, notamment un grillage inoxydable connu de l'homme du métier. La structure de renfort est une plaque avec des orifices. Selon toutes les variantes, la couche acoustiquement résistive 54 comprend des orifices permettant de faire communiquer les zones disposées de part et d'autre de ladite couche acoustiquement résistive 54.

Selon un mode de réalisation décrit dans les documents FR-2.844.304 ou US-6.772.857, la couche acoustiquement résistive 54 est constituée d'une pluralité de bandes disposées selon le sens d'écoulement des flux et reliées entre elles par une pluralité d'éclisses assurant la reprise des efforts et ayant une largeur réduite par rapport à la largeur des bandes de manière à assurer la continuité du caractère homogène du taux de surface ouverte.

Ce panneau pour le traitement acoustique 50 peut être endommagé et comprendre une déformation 60 en creux, en raison par exemple d'un impact accidentel en vol (oiseau, glace,..) ou en maintenance (chute d'outils,...).

Le procédé de réparation comprend une première étape décrite sur la figure 5 consistant à retirer une partie de la structure alvéolaire 56 et de la couche acoustiquement résistive 56 au niveau de la déformation en creux 60 de manière à obtenir un évidement 62 délimité par au moins une paroi latérale 64 sensiblement perpendiculaire à la couche réflectrice 58 et/ou à la couche acoustiquement résistive 54.

La deuxième étape illustrée sur la figure 6 consiste à réaliser un bloc 66 comportant de l'extérieur vers l'intérieur une structure acoustiquement résistive 68 définissant une face avant et au moins une structure alvéolaire 70. La face avant du bloc 66 a un contour 72 dont les formes sont adaptées à celles de l'évidement 62 lorsque la couche acoustiquement résistive 68 du bloc 66 est disposée au niveau de la couche acoustiquement résistive 54 du panneau 50. Ainsi, la paroi latérale 64 et le contour 72 forment une zone de jonction entre deux panneaux pour le traitement acoustique à savoir entre le panneau pour le traitement acoustique 50 à réparer et celui formé par le bloc rapporté 66. Selon l'invention, la structure alvéolaire 70 du bloc 66 comprend des conduits 74 inclinés, dont la hauteur h est inférieure à la hauteur H de la structure alvéolaire 56 du panneau pour le traitement acoustique.

Les conduits 74 sont inclinés de telle manière que, sur au moins une partie du contour de l'évidement 62, lesdits conduits sont jointifs avec la paroi latérale 64 de l'évidement 62 au niveau de la couche acoustiquement résistive 54 et écartés de la paroi latérale 64 de !'évidement 62 à proximité de la couche réflectrice 58. Cette inclinaison permet d'obtenir un espace dit de jonction 76 entre d'une part la structure alvéolaire 70 du bloc et d'autre part la structure alvéolaire 56 et la couche réflectrice 58 du panneau 50 pour le traitement acoustique.

Les conduits inclinés 74 fournissent la même réponse acoustique que les conduits droits avec une hauteur moindre et l'espace de jonction 76 permet de loger des moyens de liaison 78 entre le bloc rapporté 66 et le panneau pour le traitement acoustique 50.

Pour limiter l'impact de la réparation sur le traitement acoustique, le jeu entre le contour 72 et la paroi latérale 64 de l'évidement doit être le plus faible possible. De préférence, les conduits 74 inclinés sont obturés au niveau de leurs extrémités opposées à la couche acoustiquement résistive 68.

Selon un mode de réalisation, le bloc 66 peut comprendre une couche réflectrice plaquée contre la face de la structure alvéolaire opposée à celle contre laquelle est appliquée la couche acoustiquement résistive.

Selon un autre mode de réalisation illustré sur les figures 6 et 7, le bloc 66 comprend une structure de garnissage 80 solidarisée à la structure alvéolaire 70 dont les formes extérieures sont adaptées à celles de l'évidement 62 et qui obture les conduits 74 au niveau de leurs extrémités opposées à la couche acoustiquement résistive 68. Ainsi, le bloc 66 comprend une face arrière 82 susceptible d'être plaquée contre la couche réflectrice 58 et au moins une paroi latérale 84 susceptible d'être accolée contre la paroi latérale 64 de l'évidement 62 lorsque le bloc 66 est mis en place.

Avantageusement, le bloc 66 est fixé à la couche réflectrice 58 grâce à des moyens de liaison 78 tels que par collage, rivetage ou autre par exemple. Avantageusement, les conduits 74 de la structure alvéolaire 70 ont des sections similaires à celles des conduits droits de la structure alvéolaire du panneau 50. Cependant, les sections pourraient être différentes mais conférer la même réponse sur le plan acoustique.

Avantageusement, les conduits forment un angle non nul avec la normale à la couche acoustiquement résistive qui varie de l'ordre de 10 à 30°.

De préférence, les conduits forment un angle a avec la normale à la couche acoustiquement résistive de l'ordre de 30°.

Selon une première variante illustrée sur la figure 8, le bloc 66 peut comprendre plusieurs secteurs 86 de structures alvéolaires, chaque secteur ayant une direction d'inclinaison propre orientée de telle manière que les extrémités des conduits orientées en direction de la couche réflectrice 58 sont dirigées vers le centre du bloc.

Dans le cas d'un évidement 62 rectangulaire ou carré, le bloc 66 comprend quatre secteurs 86 délimités par les diagonales du carré ou du rectangle avec en partie centrale une forme pyramidale creuse 88 sous la couche acoustiquement résistive 68. Même si elle n'offre pas la même réponse sur le plan acoustique que les conduits 74 inclinés, cette forme centrale creuse 88 est active sur le plan du traitement acoustique.

Selon une autre variante illustrée sur la figure 9, le bloc 66 comprend deux secteurs de structures alvéolaires, les deux secteurs ayant des directions d'inclinaison opposées, les extrémités des conduits inclinés 74 du premier secteur étant orientées selon une première direction et les extrémités des conduits inclinés 74 du second secteur étant orientées selon une seconde direction opposée à la première.

Dans ce cas, le bloc 66 comprend une forme centrale creuse 90 qui s'étend perpendiculairement au plan d'inclinaison avec une section triangulaire. Selon cette variante, les zones de jonction perpendiculaires au plan d'inclinaison peuvent être renforcées avec des éclisses 92. Même dans ce cas, la surface recouverte par les éclisses 92 est inférieure à celle recouverte par les éclisses nécessaires selon les procédés de réparation de l'art antérieur.

De préférence, le bloc 66 comprend au moins deux secteurs, les directions d'inclinaison des conduits des deux secteurs étant convergentes en direction de la couche réflectrice 58.

A titre comparatif, pour une zone de réparation carrée de 200 mm de côté avec une hauteur H de 35 mm, si on utilise le premier mode opératoire de l'art antérieur décrit par les figures 2A et 2B, la surface de la plaque avant 20 non active sur le plan acoustique est de l'ordre de 53000 mm².

Si on utilise le second mode opératoire de l'art antérieur décrit par les figures 3A à 3D, la surface recouverte par les éclisses 26 non active sur le plan acoustique est de l'ordre de 28000 mm².

Si on utilise un bloc 66 avec quatre secteurs avec des conduits inclinés à 30°, la surface débouchante de la forme centrale en creux 88 (acoustiquement active mais non homogène avec le reste des conduits) est de l'ordre de 1225 mm². L'invention n'est pas limitée à l'application précédemment décrite.

Ainsi, l'invention peut être utilisée pour assurer la liaison entre deux portions d'un même panneau acoustique ou entre deux panneaux pour le traitement acoustique. Ainsi, un bloc peut être intercalé entre les chants droits de deux panneaux pour le traitement acoustique, le bloc comprenant deux chants, un premier chant accolé au chant du premier panneau et un second chant accolé au chant du second panneau. Pour limiter l'impact sur le plan acoustique de la jonction entre les deux panneaux, le bloc comprend d'une part au niveau du premier chant un premier secteur de conduits inclinés selon une première direction de manière à ce que les extrémités des conduits disposées au niveau de la couche acoustiquement résistive soient proches du premier chant et les extrémités opposées desdits conduits soient éloignées du premier chant, et d'autre part, au niveau du second chant un second secteur de conduits inclinés selon une seconde direction de manière à ce que les extrémités des conduits disposées au niveau de la couche acoustiquement résistive soient proches du second chant et les extrémités opposées desdits conduits soient écartées du second chant.

Dans tous les cas, l'invention permet d'assurer une continuité acoustique entre au moins deux portions de structures alvéolaires avec des chants espacés selon au moins une direction et consiste à utiliser un bloc comprenant au moins un secteur de structures alvéolaires avec des conduits inclinés selon une direction de manière à ce que les extrémités des conduits soient proches d'un des chants des portions de structures alvéolaires au niveau de la couche acoustiquement résistive et les extrémités opposées desdits conduits soient écartées dudit chant.

## Revendications

1. Panneau pour le traitement acoustique comportant d'une part au moins deux portions avec des chants (64) espacés selon au moins une direction et avec de l'extérieur vers l'intérieur une couche acoustique résistive (54), au moins une structure alvéolaire (56) et une couche réflectrice (58), et d'autre part, un bloc (66) intercalé entre les deux chants (64) comportant de l'extérieur vers l'intérieur, une couche acoustiquement résistive (68) disposée au niveau de ladite couche acoustiquement résistive (54) des deux portions (56) et au moins une structure alvéolaire (70), **caractérisé en ce que** le bloc (66) comprend au moins un secteur de structures alvéolaires avec des conduits (74) inclinés dont la hauteur h est inférieure à la hauteur H de la structure alvéolaire (56) du panneau pour le traitement acoustique, lesdits conduits (74) étant inclinés selon une direction telle que les extrémités des conduits soient proches d'un des chants des portions au niveau de la couche acoustiquement résistive (54) et les extrémités opposées desdits conduits soient écartées dudit chant et de la couche réflectrice (58) des deux portions de manière à loger des moyens de liaison entre ledit bloc (66) et ledit panneau.

2. Panneau pour le traitement acoustique selon la revendication 1, **caractérisé en ce que** les conduits (74) forment un angle non nul avec la normale à la couche acoustiquement résistive qui varie de l'ordre de 10 à 30°.

3. Panneau pour le traitement acoustique selon la revendication 2, **caractérisé en ce que** les conduits (74) forment un angle a avec la normale à la couche acoustiquement résistive de l'ordre de 30°.

4. Panneau pour le traitement acoustique selon l'une quelconque des revendications précédentes, **caractérisé en ce que** le bloc (66) comprend plusieurs secteurs (86) de structures alvéolaires, chaque secteur ayant une direction d'inclinaison propre telle que les extrémités des conduits orientées en direction de la couche réflectrice (58) sont dirigées vers le centre du bloc, le bloc ayant en partie centrale une forme creuse (88, 90) sous la couche acoustiquement résistive (68).

5. Panneau pour le traitement acoustique selon la revendication 4 , **caractérisé en ce que** le bloc (66) comprend deux secteurs de structures alvéolaires, les deux secteurs ayant des directions d'inclinaison opposées, les extrémités des conduits inclinés (74) du premier secteur étant orientées selon une première direction et les extrémités des conduits inclinés (74) du second secteur étant orientées selon une seconde direction opposée à la première.

6. Panneau pour le traitement acoustique selon l'une quelconque des revendications précédentes, **caractérisé en ce que** le bloc (66) comprend une structure de garnissage (80) solidarisée à la structure alvéolaire (70) avec une face arrière (82) susceptible d'être plaquée contre la couche réflectrice (58) du panneau et au moins une paroi latérale (84) susceptible d'être accolée contre les chants (64).

7. Procédé de réparation d'un panneau pour le traitement acoustique comportant de l'extérieur vers l'intérieur une couche acoustique résistive (54), au moins une structure alvéolaire (56) et une couche réflectrice (58), consistant à retirer une partie de la structure alvéolaire (56) et de la couche acoustiquement résistive (56) de manière à obtenir un évidement (62) délimité par au moins une paroi latérale (64) sensiblement perpendiculaire à la couche réflectrice (58) et/ou à la couche acoustiquement résistive (54), à réaliser un bloc (66) comportant de l'extérieur vers l'intérieur une structure acoustiquement résistive (68) définissant une face avant et au moins une structure alvéolaire (70), la face avant du bloc (66) ayant un contour 72 dont les formes sont adaptées à celles de l'évidement (62) lorsque la couche acoustiquement résistive (68) du bloc (66) est disposée au niveau de la couche acoustiquement résistive (54) du panneau et à placer ledit bloc (66) dans ledit évidement (62), **caractérisé en ce que** la structure alvéolaire (70) du bloc (66) comprend des conduits (74) inclinés, dont la hauteur h est inférieure à la hauteur H de la structure alvéolaire (56) du panneau pour le traitement acoustique, les conduits (74) étant inclinés de telle manière que, sur au moins une partie du contour de l'évidement (62), lesdits conduits sont jointifs avec la paroi latérale (64) de l'évidement (62) au niveau de la couche acoustiquement résistive (54) et écartés de la paroi latérale (64) de l'évidement (62) à proximité de la couche réflectrice (58).

8. Procédé de réparation d'un panneau pour le traitement acoustique selon la revendication 7, **caractérisé en ce que** les conduits (74) forment un angle non nul avec la normale à la couche acoustiquement résistive qui varie de l'ordre de 10 à 30°.

9. Procédé de réparation d'un panneau pour le traitement acoustique selon la revendication 8, **caractérisé en ce que** les conduits (74) forment un angle a avec la normale à la couche acoustiquement résistive de l'ordre de 30°.

10. Procédé de réparation d'un panneau pour le traitement acoustique selon l'une quelconque des revendications 7 à 9, **caractérisé en ce que** le bloc (66) comprend plusieurs secteurs (86) de structures alvéolaires, chaque secteur ayant une direction d'inclinaison propre telle que les extrémités des conduits orientées en direction de la couche réflectrice (58) sont dirigées vers le centre du bloc, le bloc ayant en partie centrale une forme creuse (88, 90) sous la couche acoustiquement résistive (68).

11. Procédé de réparation d'un panneau pour le traitement acoustique selon la revendication 10, consistant à réaliser un évidement (62) rectangulaire ou carré, **caractérisé en ce que** le bloc (66) comprend quatre secteurs (86) délimités par les diagonales de l'évidement carré ou rectangulaire avec en partie centrale une forme pyramidale creuse (88) sous la couche acoustiquement résistive (68).

12. Procédé de réparation d'un panneau pour le traitement acoustique selon l'une quelconque des revendications 7 à 11, **caractérisé en ce que** le bloc (66) comprend une structure de garnissage (80) solidarisée à la structure alvéolaire (70) avec une face arrière (82) susceptible d'être plaquée contre la couche réflectrice (58) et au moins une paroi latérale (84) susceptible d'être accolée contre les chants (64).
